# EUROPÄISCHE PATENTSCHRIFT

(11) **EP 4 392 637 B1**
(45) Veröffentlichungstag und Bekanntmachung des Hinweises auf die Patenterteilung: **13.05.2026**
(21) Anmeldenummer: 22733438.0
(22) Anmeldetag: 15.06.2022
(51) Int. Cl.: E06B 9/13, E06B 9/15, E06B 9/72, E05D 15/24, E06B 3/48, E06B 9/06, H02K 7/10, H02K 9/04

(54) **ANTRIEBSANORDNUNG FÜR EIN HUBTOR MIT EINEM ROHRMOTOR AUF EINER STATISCHEN WELLE, HUBTOR UND VERFAHREN ZUM BETREIBEN EINES HUBTORES**
DRIVE ASSEMBLY FOR A LIFTABLE GATE WITH A TUBE MOTOR ON A STATIC SHAFT, LIFTABLE GATE, AND METHOD FOR OPERATING A LIFTABLE GATE
ENSEMBLE D'ENTRAÎNEMENT POUR UNE PORTE RELEVABLE AVEC UN MOTEUR TUBULAIRE SUR UN ARBRE STATIQUE, PORTE RELEVABLE, ET PROCÉDÉ DE FONCTIONNEMENT D'UNE PORTE RELEVABLE

(30) Priorität: 25.08.2021 DE 102021122013
(43) Veröffentlichungstag der Anmeldung: 03.07.2024
(73) Patentinhaber: Seysen GmbH & Co. KG, 82166 Grafelfing (DE)
(72) Erfinder: SEYSEN, Manfred, 82166 Gräfelfing (DE)
(74) Vertreter: LKGLOBAL Partnerschaftsgesellschaft mbB
(86) Internationale Anmeldenummer: PCT/EP2022/066397
(87) Internationale Veröffentlichungsnummer: WO 2023/025428

(56) Entgegenhaltungen:
- FR-A1- 2 972 872
- US-A- 4 651 940
- US-A1- 2017 201 140

## Beschreibung

### TECHNISCHES GEBIET

Die vorliegende Offenbarung bezieht sich auf Hubtore im Allgemeinen und im Speziellen auf Antriebsvorrichtungen für derartige Hubtore.

### TECHNISCHER HINTERGRUND

Hubtore werden bereits seit längerer Zeit beispielsweise in Fabrik- oder Lagerhallen als Durchgänge oder Durchfahrten zwischen voneinander abgegrenzten Bereichen verwendet. Derartige Hubtore sind mit einem vertikal bewegbaren Torblatt ausgestattet, welches in zwei seitlichen Torzargen geführt wird. Das Torblatt wird beim Öffnen des Tores durch eine Antriebsvorrichtung nach oben gezogen und beim Schließen des Tores nach unten abgelassen. Im Stand der Technik sind dabei Tore mit einem flexiblen, folienartigen Torblatt sowie Tore mit segmentierten Torblättern mit einzelnen zueinander schwenkbar miteinander verbundenen festen Torblattsegmenten bekannt. Dabei sind in der Regel für Hubtore mit einen Folienbehang und für Hubtore mit einem festen Torblatt verschieden Antriebsvorrichtungen nötig, welche das Torblatt bewegen bzw. führen. Zudem sind insbesondere für Schnelllauftare leistungsstarke Motoren notwendig, die üblicherweise in einem Torsturz seitlich der eigentlichen Aufnahme für das Torblatt angeordnet werden.

Die US 4 651 940 A beschreibt eine Schirmaufwickelvorrichtung, in welcher die Leistung eines in einer Schirmaufwickelwelle enthaltenen Außenläufermotors mit Normal-Rückwärtsrichtung auf die Schirmaufwickelwelle übertragen wird, nachdem sie in der Geschwindigkeit reduziert wurde. Eine Bremse wird durch einen Bremsmechanismus auf das von dem Motor ausgegebene Moment synchron mit dem Stoppen des Motors angewendet. Die Anzahl der Umdrehungen der Schirmaufwickelwelle wird von einem Zähler gezählt und der Motor wird so gesteuert wird, dass er bei einer voreingestellten Anzahl von Umdrehungen stoppt. Die Ausgabe einer manuellen Welle, die manuell in Normal-Rückwärtsrichtung gedreht wird, wird durch einen Selbstverriegelungsmechanismus auf die Schirmaufwickelwelle übertragen, nachdem die Geschwindigkeit reduziert wurde.

### BESCHREIBUNG

Dementsprechend kann es als Aufgabe der Erfindung angesehen werden, eine platzsparende Antriebsvorrichtung für ein Hubtor zur Verfügung zu stellen, die sowohl zur Verwendung für Hubtore mit einem flexiblen Torblatt bzw. Behang als auch für Hubtore mit einem festen und segmentierten Torblatt geeignet ist.

Diese Aufgabe wird durch eine Antriebsvorrichtung gemäß Patentanspruch 1 sowie durch ein Hubtor gemäß Patentanspruch 12 und durch ein Verfahren zum Betreiben eines solchen Hubtores gemäß Patentanspruch 13 gelöst. Weitere Ausführungsformen ergeben sich aus den abhängigen Ansprüchen sowie aus der folgenden Beschreibung.

Gemäß einem ersten Aspekt der Erfindung wird eine Antriebsvorrichtung für ein Hubtor zur Verfügung gestellt. Die Antriebsvorrichtung weist eine Innenwelle mit einer Innenwellenlänge und eine äußere Hohlwelle mit eine Hohlwellenlänge auf. Die äußere Hohlwelle ist konzentrisch mit der Innenwelle ausgerichtet. Die Innenwelle ist ausgestaltet, in einem eingebauten Zustand drehfest an dem Hubtor gelagert zu sein. Die äußere Hohlwelle dreht sich um die Innenwelle, wenn die Antriebsvorrichtung in dem eingebauten Zustand in Betrieb genommen wird. Die äußere Hohlwelle ist konfiguriert, ein Torblatt des Hubtores aufzuwickeln oder abzuwickeln, wenn die Antriebsvorrichtung in Betrieb genommen wird.

Eine derartige Antriebsvorrichtung ist dazu vorgesehen, in einen Torsturz eines Hubtores eingebaut zu werden. Bei der Innenwelle handelt es sich um eine handelsübliche Welle, welche an Ihren Enden Aufhängungs- bzw. Lagerpunkte aufweist. Im Stand der Technik wird eine solche Welle üblicherweise direkt von einem Motor angetrieben, wobei die Antriebskraft über die Welle auf verschiedene Übersetzungsmittel wie Riemen oder Zahnscheiben übertragen werden kann, um das Tor zu öffnen und zu schließen.

Gemäß der vorliegenden Offenbarung ist die Innenwelle jedoch so ausgestaltet, dass diese an Ihren Enden in einem Torsturz drehfest gelagert ist, wenn die Antriebsvorrichtung in das Hubtor eingebaut ist. Die Innenwelle dreht sich also im Betrieb der Antriebsvorrichtung nicht, sondern ist gegenüber dem Hubtor stationär. Dazu kann die Innenwelle beispielsweise in entsprechenden Ausnehmungen in den Seiten eines Torsturzes drehfest befestigt werden. Die Innenwelle kann dazu beispielsweise an Ihren Enden mit dem Torsturz verschraubt, vernietet oder auf andere geeignete Weise drehfest verbunden sein.

Bei der äußeren Hohlwelle hingegen handelt es sich um eine Art Rohr, welches konzentrisch, d.h. mit gleichem Mittelpunkt, um die Innenwelle angeordnet ist. Die äußere Hohlwelle ist gegenüber der Innenwelle drehbar. Beispielsweise kann die äußere Hohlwelle durch einen oder mehrere Motoren gegenüber der Innenwelle angetrieben bzw. verdreht werden, wie weiter unten mit Bezug zu bestimmten Ausführungsformen detaillierter beschrieben wird.

Die äußere Hohlwelle kann zu diesem Zweck beispielsweise in eingebautem Zustand der Antriebsvorrichtung in einem Hubtor an ihren Enden drehbar in einem Torsturz gelagert sein, so dass die Hohlwelle um ihre Mittelpunktachse gedreht werden kann, ohne ihre Position gegenüber dem Torsturz horizontaler oder vertikaler Richtung zu verändern.

Die äußere Hohlwelle kann bei einem Hubtor mit einem folienartigen Torblatt bzw. Behang gleichzeitig dazu dienen, das Torblatt beim Öffnen des Tores direkt aufzunehmen bzw. aufzuwickeln. Bei einem Tor mit einem festen bzw. segmentierten Torblatt kann das Drehmoment der Antriebsvorrichtung durch die äußere Hohlwelle jedoch auch auf andere Bewegungs- und Übersetzungselemente, wie weiter unten beschrieben, übertragen werden, um so das Torblatt anzuheben oder abzusenken.

Die äußere Hohlwelle weist vorzugsweise einen Außendurchmesser von etwa 180 mm auf. Jedoch sind je nach verfügbarem Bauraum und je nach Anforderung auch andere Durchmesser denkbar.

Die Innenwelle und die äußere Hohlwelle können beispielsweise aus einem metallischen Werkstoff wie Stahl oder Aluminium gefertigt sein. Es ist jedoch auch denkbar, dass die Innenwelle und die äußere Hohlwelle aus anderen geeigneten Werkstoffen, wie beispielsweise aus hochfestem Kunststoff oder jedem anderen geeignet Werkstoff, gefertigt sind. Diese Aufzählung ist jedoch lediglich beispielhaft und anderen Werkstoffe sind ebenfalls denkbar.

Gemäß einer Ausführungsform weist die Antriebsvorrichtung ferner einen ersten Motor mit einem ersten äußeren Motorelement und einem ersten inneren Motorelement auf. Das erste innere Motorelement ist drehfest auf der Innenwelle gelagert. Das erste äußere Motorelement umgibt das erste innere Motorelement und ist über eine drehbare Verbindung mit dem ersten inneren Motorelement verbunden. Die äußere Hohlwelle umgibt das erste äußere Motorelement und ist über eine drehfeste Verbindung mit dem ersten äußeren Motorelement verbunden.

Bei einem solchen Motor kann es sich um einen Außenläufermotor handeln, bei dem der Stator innen angeordnet ist und von dem Rotor umgeben wird. Das erste innere Motorelement entspricht dabei also dem Stator des ersten Motors. Das erste äußere Motorelement entspricht dem Rotor des ersten Motors.

Da die Innenwelle in eingebautem Zustand der Antriebsvorrichtung drehfest gegenüber dem Hubtor bzw. gegenüber dem Torsturz des Hubtores ist und das innere Motorelement drehfest auf der Innenwelle gelagert ist, ist kann sich das innere Motorelement gegenüber dem Torsturz des Hubtores ebenfalls nicht drehen bzw. bewegen. Dass das innere Motorelement drehfest auf der Innenwelle gelagert ist, bedeutet insbesondere, dass die Innenwelle sich zentral durch das innere Motorelement erstreckt und drehfest mit diesem verbunden ist. Die Innenwelle nimmt also die Funktion einer Abtriebswelle eines standardmäßigen Elektromotors ein, allerding wird diese Antriebswelle durch die drehfeste Verbindung mit dem Torsturz daran gehindert, sich zu drehen.

Das äußere Motorelement umgibt das innere Motorelement so, dass dieses ebenfalls konzentrisch zu der Innenwelle angeordnet ist. Mit anderen Worten sind also die Innenwelle, das innere Motorelement und das äußere Motorelement konzentrisch bezüglich einer gemeinsamen Symmetrieachse, die entlang der Längserstreckungsrichtung der Innenwelle verläuft, angeordnet. Das äußere Motorelement ist gegenüber dem inneren Motorelement um diese gemeinsame Symmetrieachse drehbar gelagert. Das innere Motorelement umgibt also die Innenwelle und ist fest mit dieser verbunden. Das äußere Motorelement wiederum umgibt das innere Motorelement und ist gegenüber diesem drehbar.

Das innere Motorelement kann Permanentmagneten oder einen oder mehrere mit entsprechenden Spulen gebildete Elektromagneten beinhalten. Das äußere Motorelement kann ebenfalls einen oder mehrere Elektromagneten mit Magnetspulen oder Permanentmagneten beinhalten. Allerdings beinhaltet mindestens eines des inneren Motorelements und des äußeren Motorelements mindestens einen Elektromagneten.

Der erste Motor kann eine Leistung von etwa 1 kW und eine Kraft von etwa 1,2 kN zur Verfügung stellen. Allerdings sind auch andere technische Kennzahlen möglich, die für die jeweilige Anwendung geeignet sind. Insbesondere muss die Motorleistung groß genug sein, um das jeweilige Torblatt des Hubtores, in das die Antriebsvorrichtung verbaut wird, anheben zu können. Insbesondere ist eine gesamte Motorleistung von bis zu 3 kW bevorzugt. Dabei kann diese Leistung durch den ersten Motor alleine oder, wie weiter unten beschrieben, durch mehrere Motoren zur Verfügung gestellt werden.

Die technischen Charakteristika des ersten Motors können insbesondere so ausgelegt sein, dass die Antriebsvorrichtung für ein Schnelllauftor mit einer Öffnungsgeschwindigkeit von bis zu ca. 4 m/s verwendet werden kann. Gewöhnliche Industriehubtore werden üblicherweise mit Öffnungsgeschwindigkeiten von 0,2 m/s bis 0,3 m/s betrieben.

Der erste Motor kann ferner als Gleichstrommotor mit einem Kommutator (Kommutatormotor) oder als ein- oder mehrphasiger Wechselstrommotor, insbesondere als Drehstrom-Asynchronmotor oder als Synchronmotor ausgestaltet sein. Diese Aufzählung ist jedoch lediglich beispielhafter Natur und andere dem Fachmann bekannte und geeignete Elektromotoren können ebenfalls verwendet werden.

Da die äußere Hohlwelle drehfest mit dem äußeren Motorelement (Rotor) verbunden ist, die Innenwelle (in eingebautem Zustand der Antriebsvorrichtung) drehfest mit dem Hubtor und mit dem ersten Motorelement (Stator) verbunden ist und das äußere Motorelement gegenüber dem inneren Motorelement drehbar ist, führt eine Aktivierung des ersten Motors dazu, dass das äußere Motorelement, und damit die mit dem äußeren Motorelement verbundene Hohlwelle, in Drehung versetzt werden.

Mit anderen Worten wird bei dieser Anordnung also bei einem Standard-Elektromotor die Abtriebswelle festgehalten, wodurch sich das Außengehäuse des Motors (und damit die damit verbundene äußere Hohlwelle) dreht.

Optional kann in der äußeren Hohlwelle zudem an einer oder an beiden Seiten eine Kühlvorrichtung, wie beispielsweise ein Ventilator oder jede andere geeignete Kühlvorrichtung, angeordnet sein. Eine solche Kühlvorrichtung kann ausgelegt sein, einen Luftstrom von außen in die Hohlwelle zu schaffen und dadurch den ersten Motor zu kühlen. Zu diesem Zweck können in der äußeren Hohlwelle beispielsweise auch Kühlöffnungen angeordnet sein, die als Abluftöffnungen für die durch die Kühlvorrichtung eingebrachte Luft dienen. Alternativ zu einer solchen Luftkühlung kann auch eine Flüssigkeitskühlung um den ersten Motor angebracht sein.

Gemäß einer Ausführungsform ist die äußere Hohlwelle integral mit dem ersten äußeren Motorelement ausgebildet.

Bei einer solchen Ausführungsform sind die äußere Hohlwelle und das erste äußere Motorelement, d.h. der Rotor, aus einem Stück gefertigt. Die Elektromagneten oder Permanentmagneten des äußeren Motorelement (je nach Ausführung) befinden sich also direkt in entsprechenden Abschnitten der äußeren Hohlwelle, beispielsweise in von der Hohlwelle nach innen gerichteten entsprechenden Ausnehmungen.

Gemäß einer weiteren Ausführungsform wird die drehfeste Verbindung der äußeren Hohlwelle mit dem ersten äußeren Motorelement über eine reibschlüssige Verbindung zur Verfügung gestellt.

In einer solchen Ausführungsform kann der Motor beispielsweise in die äußere Hohlwelle / das Rohr eingepresst werden. Durch diese Presspassung wird eine reibschlüssige Verbindung zwischen dem äußeren Motorelement und der Hohlwelle zur Verfügung gestellt, die dafür sorgt, dass die äußere Hohlwelle sich stets mit dem äußeren Motorelement dreht, ohne dass das Material des äußeren Motorelements und der Hohlwelle stoffschlüssig miteinander verbunden sind. Dies ermöglicht einen einfacheren Austausch eines defekten Motors.

Gemäß einer weiteren Ausführungsform wird die drehfeste Verbindung der äußeren Hohlwelle mit dem ersten äußeren Motorelement durch eine Schraubverbindung, durch eine Schweißverbindung, durch eine Nietverbindung oder durch eine Klebeverbindung zur Verfügung gestellt.

Bei dieser Ausführungsform handelt es sich um eine Alternative zu der lösbaren Verbindung durch eine reibschlüssige Verbindung. Durch die Verwendung von Schraubverbindungen oder Nietverbindungen kann ein einfacher Ein- und Ausbau des Motors erfolgen. Insbesondere sind bei Schraub-, Niet-, Schweiß- und Klebeverbindungen die Anforderungen an die Passung des Innenmaßes der Hohlwelle zu dem Außenmaß des äußeren Motorelements weniger strikt, da die feste Verbindung erst nachträglich hergestellt wird.

Gemäß einer weiteren Ausführungsform erstrecken sich das erste äußere Motorelement und das erste innere Motorelement entlang der gesamten Hohlwellenlänge.

Der erste Motor erstreckt sich in dieser Ausführung also entlang der gesamten Hohlwelle. Dadurch dann das Motordrehmoment und die Motorleistung auf einfache Weise erhöht werden. Durch die ausgedehnten Motorelemente steht viel Platz für längere Spulenwicklungen zur Verfügung. Dadurch erhöht sich die Motorleistung, ohne in der Gesamtanordnung mehr Platz einzunehmen (Der eingenommene Platz wird lediglich durch die äußere Hohlwelle definiert).

Jedoch kann die Ausdehnung des ersten Motors, d.h. des ersten inneren Motorelements und des ersten äußeren Motorelements, jede beliebige Länge bis hin zu der gesamten Hohlwellenlänge annehmen.

Gemäß einer weiteren Ausführungsform weist die Antriebsvorrichtung ferner mindestens einen zweiten Motor mit einem zweiten äußeren Motorelement und einem zweiten inneren Motorelement auf. Der zweite Motor ist benachbart zu dem ersten Motor angeordnet. Das zweite innere Motorelement ist drehfest auf der Innenwelle gelagert. Das zweite äußere Motorelement umgibt das zweite innere Motorelement und ist über eine drehbare Verbindung mit dem zweiten inneren Motorelement verbunden. Die äußere Hohlwelle umgibt das zweite äußere Motorelement und ist über eine drehfeste Verbindung mit dem zweiten äußeren Motorelement in gleicher Weise wie mit dem ersten äußeren Motorelement verbunden.

Die obigen Ausführungen bezüglich des ersten Motors gelten uneingeschränkt auch für den zweiten Motor. Der zweite Motor kann insbesondere gleich wie der erste Motor ausgeführt sein. Es ist jedoch auch denkbar, dass der zweite Motor (und jeder weitere Motor) und der erste Motor gemäß unterschiedlicher oben beschriebener Ausführungsformen ausgestaltet sind. Jede Kombination von Ausführungsformen des ersten Motors und der weiteren Motoren ist möglich und ausdrücklich von der vorliegenden Offenbarung umfasst. Insbesondere können der erste Motor und die weiteren Motoren unterschiedlich mit der äußeren Hohlwelle verbunden sein.

Der zweite Motor (und eventuell vorhandene weitere Motoren) sind dabei ebenso wie der erste Motor auf der Innenwelle gelagert.

Die Verwendung von zwei oder mehr Motoren ermöglicht ebenso eine Erhöhung der Gesamtleistung und des Gesamtdrehmoments wie die Verwendung eines über die gesamte Hohlwellenlänge ausgedehnten Motors, da sämtliche Motoren ihr Drehmoment entlang der gleichen Drehachse übertragen und sich die Drehmomente mehrerer Motoren dadurch addieren. Selbstredend kann bei einer Ausführungsform mit mehr als einem Motor der erste Motor nicht die gesamte Länge der äußeren Hohlwelle einnehmen.

Gemäß einer weiteren Ausführungsform ist die Innenwellenlänge größer als die Hohlwellenlänge, so dass die Innenwelle seitlich über die Hohlwelle so hervorsteht, dass ein erster seitlicher Überstand und ein zweiter seitlicher Überstand gebildet wird. An mindestens einem des ersten seitlichen Überstands und des zweiten seitlichen Überstands ist eine Zahnscheibe auf der Innenwelle und drehbar zu der Innenwelle gelagert. Die äußere Hohlwelle ist fest mit der Zahnscheibe verbunden.

Die Innenwelle ist in dieser Ausführung also ebenfalls im Zentrum der äußeren Hohlwelle entlang einer gemeinsamen Symmetrieachse angeordnet. Allerdings steht die Innenwelle zumindest an einer Seite aus der Hohlwelle hervor, so dass ein Abschnitt der Innenwelle außerhalb der Hohlwelle zugänglich ist. Die Innenwelle ist jedoch an ihren äußersten Enden weiterhin so ausgestaltet, dass die Innenwelle an einem Torsturz eines Hubtores drehfest lagerbar ist. So entsteht also ein von außen frei zugänglicher Bereich der Innenwelle, d.h. ein Abschnitt der Innenwelle, der von der äußeren Hohlwelle nicht überdeckt ist, und der sich zwischen den Verbindungspunkten der Innenwelle mit dem Torsturz und der äußeren Hohlwelle befindet.

Auf diesem Abschnitt ist eine Zahnscheibe angebracht, die gegenüber der Innenwelle drehbar ist. Gleichzeitig ist die äußere Hohlwelle fest mit der Zahnscheibe verbunden, so dass sich die Zahnscheibe mit dreht, wenn die äußere Hohlwelle der Antriebsanordnung in Rotation versetzt wird. Die Zahnscheibe ist so ausgelegt, dass auf ihr ein Zahnriemen angebracht werden kann, der zur Übertragung und Übersetzung des Drehmoments verwendet wird.

Es ist jedoch zu beachten, dass anstelle der Zahnscheibe auch andere geeignete Übersetzungselemente wie beispielsweise eine Kettenscheibe, eine Keilriemenscheibe oder jede andere geeignete Scheibe oder jedes andere geeignete Übersetzungs- und Kraftübertragungselement verwendet werden kann. Bei solchen Ausführungsformen können anstelle des Zahnriemens eine Kette oder ein Keilriemen oder andere geeignete längliche Übertragungselemente verwendet werden.

Ein anderes Ende des Zahnriemens (oder der Kette oder des Keilriemens etc.) kann dann beispielsweise verwendet werden, um die von der Antriebsvorrichtung aufgebrachte Kraft auf ein segmentiertes Torblatt, entweder lediglich auf das unterste Torblattsegment oder auf alle Torblattsegmente, zu übertragen und das Torblatt dadurch durch die Antriebskraft nach oben zu ziehen und das Hubtor zu öffnen.

Bei solchen Hubtoren mit mehreren Torblattsegmenten kann das Hubtor dann beispielsweise in einer Spirale innerhalb des Torsturzes untergebracht/aufgewickelt werden, wenn das Tor geöffnet ist.

Durch die Verwendung einer solchen durch eine Zahnscheibe und einen Zahnriemen gebildeten Übersetzungsanordnung kann die Antriebsvorrichtung also ebenfalls für Hubtore mit festen Torblattsegmenten verwendet werden, ohne dass große bauliche Veränderungen an der Antriebsvorrichtung notwendig werden.

Gemäß einer weiteren Ausführungsform ist der erste Motor ein Drehstrom-Asynchronmotor.

Gemäß einer weiteren Ausführungsform ist der erste Motor ein Synchronmotor.

Gemäß einer weiteren Ausführungsform weist die Antriebsvorrichtung ferner eine Bremsvorrichtung auf. Die Bremsvorrichtung ist ausgestaltet, die äußere Hohlwelle mit der Innenwelle selektiv drehfest zu verbinden, um eine Bewegung der Antriebsvorrichtung zu bremsen.

Bei einer solchen Bremsvorrichtung kann es sich um jede geeignete Art von Bremse, beispielsweise um eine Scheibenbremse oder um eine Trommelbremse, handeln. Diese Aufzählung ist jedoch lediglich beispielhaft und andere Bremsvorrichtungen sind ebenfalls denkbar.

Bei einer Scheibenbremse kann beispielsweise eine Bremsscheibe an der Innenseite der äußeren Hohlwelle fest mit dieser verbunden sein. An der Innenwelle können korrespondierende Bremssättel mit Bremszylindern und Bremsbelägen drehfest angebracht sein, durch welche sich die Bremsscheibe in gelöstem Zustand der Bremsvorrichtung frei bewegen kann. In geschlossenem Zustand der Bremsvorrichtung hingegen, werden die Bremsbeläge durch die Bremszylinder gegen die Bremsscheibe gedrückt und bremsen dadurch die Rotationsbewegung der Bremsscheibe (und damit der mit der Bremsscheibe verbunden äußeren Hohlwelle) oder verhindern diese Rotationsbewegung vollständig. Dadurch kann die Antriebsvorrichtung gebremst oder festgestellt werden.

Bei einer Trommelbremse können beispielsweise Bremsbacken innen an der äußeren Hohlwelle anliegen. Die Bremsbacken sind dabei drehfest zu der Innenwelle gelagert. In gelöstem Zustand einer solchen Bremse sind die Bremsbacken nicht angepresst und die äußere Hohlwelle kann sich frei um die Bremsbacken bewegen. In geschlossenem bzw. betätigtem Zustand der Bremse werden die Bremsbacken nach außen gegen die äußere Hohlwelle gepresst und bremsen dadurch die Bewegung der Hohlwelle. Dadurch kann die Antriebsvorrichtung gebremst oder festgestellt werden.

Die Betätigung der Bremsvorrichtung kann elektrisch, mechanisch (beispielsweise durch entsprechende Seilzüge) oder sowohl elektrisch als auch mechanisch erfolgen.

Gemäß einem zweiten Aspekt der Erfindung wird ein Hubtor zur Verfügung gestellt. Das Hubtor weist eine zuvor beschriebene Antriebsvorrichtung, eine erste Torzarge, eine zweite Torzarge, einen Torsturz, ein Torblatt und eine Eingabevorrichtung auf. Die Antriebsvorrichtung ist in dem Torsturz angeordnet. Die Innenwelle der Antriebsvorrichtung ist drehfest an einer ersten Seite und an einer zweiten Seite des Torsturzes gelagert. Das Torblatt wird in der ersten Torzarge und in der zweiten Torzarge geführt. Die äußere Hohlwelle wickelt das Torblatt auf oder ab, wenn die Antriebsvorrichtung über die Eingabevorrichtung in Betrieb genommen wird.

Die Antriebsvorrichtung des Hubtores kann gemäß irgendeiner der zuvor beschriebenen Ausführungsformen ausgestaltet sein. Die Innenwelle ist dabei seitlich in dem Torsturz drehfest befestigt. Wie oben mit Bezug auf die Antriebsvorrichtung beschrieben, dreht sich dadurch bei Inbetriebnahme der Antriebsvorrichtung die äußere Hohlwelle und öffnet oder schließt das Tor.

Das Torblatt kann ein folienartiges Torblatt oder ein festes Torblatt aus mehreren miteinander verbunden einzelnen Segmenten sein, die in geschlossenem Zustand des Hubtores ein ebenes Torblatt bilden und den Öffnungsbereich des Hubtores verschließen. Ein derartiges segmentiertes Torblatt kann beispielsweise ein Torblatt eines Standard-Sektionaltores oder eines Spiral-Schnelllauftores sein.

Die erste Torzarge und die zweite Torzarge verlaufen an den Seiten des Öffnungsbereichs des Hubtores in vertikaler Richtung und schließen sich an den Torsturz an. Die Torzargen enthalten geeignete Mittel, um das Torblatt in einer Ebene des Öffnungsbereichs des Tores zu halten und in vertikaler Richtung verschiebbar zu führen, so dass das Torblatt entlang der Torzargen in vertikaler Richtung nach oben und unten gleiten kann. Beispielsweise können die Torzargen Schienen enthalten, die so ausgestaltet sind, um entsprechend ausgestaltete und an dem Torblatt befestigte Führungsrollen aufzunehmen.

Der Torsturz bildet einen Raum zur Aufnahme der Antriebsvorrichtung und des Torblatts und verläuft oberhalb des Öffnungsbereichs des Hubtores in horizontaler Richtung zwischen den beiden Torzargen. Bei einem folienartigen Torblatt kann das Torblatt direkt auf der äußeren Hohlwelle der Antriebsvorrichtung aufgewickelt/gelagert werden, wenn das Hubtor geöffnet wird. Bei einem segmentierten Torblatt eines Spiraltores können die Führungsschienen der Torzargen unmittelbar in Spiralführungen an den inneren seitlichen Flächen des Torsturzes übergehen. Derartige Spiralführungen können eine Spirale bilden, die radial außerhalb der äußeren Hohlwelle verläuft. Dadurch wird ermöglicht, dass ein segmentiertes Torblatt in einer Spirale außerhalb der äußeren Hohlwelle aufgewickelt werden kann, wenn die Antriebsvorrichtung in Betrieb gesetzt wird. Die Antriebsvorrichtung befindet sich also in geöffnetem Zustand des Hubtores innerhalb des aufgewickelten/gelagerten Torblattes.

Die Eingabevorrichtung dient dazu, Nutzereingaben zu empfangen und die Antriebsvorrichtung entsprechend zu steuern. Die Eingabevorrichtung kann beispielsweise ein Bedienfeld mit Tasten zum Öffnen und Schließen des Hubtores sein. Ein solches Bedienfeld kann auch die Möglichkeit umfassen, Betriebsparameter wie eine Öffnungs- und Schließgeschwindigkeit einzugeben. Die Eingabevorrichtung kann jedoch auch eine automatisierte Eingabevorrichtung, beispielsweise mit Näherungssensoren, sein, die das Hubtor automatisch öffnet, wenn sich ein Gegenstand dem Hubtor nähert, und das Tor anschließend wieder schließt. Es ist jedoch auch jede andere geeignete Eingabevorrichtung zum Steuern der Hubtores bzw. der Antriebsvorrichtung möglich. Unabhängig von der Art der Eingabevorrichtung kann auch eine Schnittstelle, beispielsweise zum Anschließen eines externen Computers zu Diagnose- und Reparaturzwecken, sowie ein NotausSchalter vorgesehen sein.

Gemäß einem dritten Aspekt der Erfindung wird ein Verfahren zum Betreiben eines Hubtores zur Verfügung gestellt. Das Verfahren umfasst das Erfassen einer Nutzereingabe zum Öffnen oder Schließen des Hubtores und das Aktivieren der Antriebsvorrichtung durch Versorgen des ersten Motors mit elektrischer Energie als Reaktion auf das Erfassen der Nutzereingabe. Das Verfahren umfasst ferner, abhängig von der Art der Nutzereingabe, ein Anheben oder Absenken des Torblattes durch die aktivierte Antriebsvorrichtung über die äußere Hohlwelle durch Betreiben der Antriebsvorrichtung in der entsprechenden Richtung.

Das Hubtor, an dem das Verfahren durchgeführt wird, sowie die entsprechende Antriebsvorrichtung können dabei gemäß jeder Ausführungsform des zuvor beschriebenen Hubtores und der zuvor beschriebenen Antriebsvorrichtung ausgeführt sein. Die Funktionsweise wurde dabei bereits mit Bezug auf die Antriebsvorrichtung und das Hubtor erläutert.

Über die Art der Benutzereingabe (Öffnen oder Schließen) wird die Antriebsvorrichtung in der entsprechenden Richtung betrieben. Dadurch öffnet oder schließt sich das Tor je nach Eingabe eines Benutzers, indem die Antriebsvorrichtung das Torblatt anhebt und aufwickelt/verstaut oder abwickelt und absenkt.

Gemäß einer Ausführungsform ist die Nutzereingabe eine Eingabe über ein Bedienfeld des Hubtores

Gemäß einer weiteren Ausführungsform ist die Nutzereingabe ein Erfassen eines sich auf das Hubtor zubewegenden Gegenstandes durch Sensoren.

Derartige Sensoren können beispielsweise induktive, kapazitive, magnetische, Ultraschall oder optische Näherungssensoren, wie Lichtschranken, umfassen.

Die Sensoren können jedoch auch Sensoren zur Erkennung der Anwesenheit von Transpondern oder anderen Erkennungsgeräten umfassen. Bei solchen Ausführungen kann zusätzlich eine Zugangskontrolle stattfinden.

Zusammenfassend wird durch die Erfindung also eine Antriebsvorrichtung für ein Hubtor zur Verfügung gestellt, die ohne große Modifikationen für die verschiedensten Hubtore verwendet werden kann. Eine solche Antriebsvorrichtung kann beispielsweise für Hubtore mit flexiblem/folienartigem Torblatt, für Hubtore mit festen Torblattsegmenten wie Spiraltoren oder für Standard-Sektionaltore verwendet werden. Dabei sind lediglich geringfügige Modifikationen nötig. Durch die Verwendung einer statischen zentralen Innenwelle und einer äußeren Hohlwelle mit dazwischen angeordneten Motoren wird zudem eine platzsparende Antriebsvorrichtung geschaffen, da die Motoren nicht seitlich in dem Torsturz untergebracht werden müssen, sondern sich innerhalb eines Rohrs befinden, das gleichzeitig zur Aufnahme des Torblattes dient. Zudem wird ein entsprechendes Hubtor sowie ein Verfahren zum Betreiben eines solchen Hubtores zur Verfügung gestellt.

### KURZBESCHREIBUNG DER FIGUREN

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: Eine schematische Darstellung eines Querschnitts einer Antriebsvorrichtung für ein Hubtor mit einem einzelnen sich in gesamter Länge einer Hohlwelle erstreckenden Motor entlang der Schnittlinie A-A in Fig. 1A gemäß einer beispielhaften Ausführungsform.
- **Fig. 1A**: Eine schematische Seitenansicht einer Antriebsvorrichtung gemäß einer beispielhaften Ausführungsform.
- **Fig. 2**: Eine schematische Darstellung eines Querschnitts einer Antriebsvorrichtung für ein Hubtor mit zwei Motoren entlang der Schnittlinie A-A in Fig. 1A gemäß einer beispielhaften Ausführungsform.
- **Fig. 3**: Eine schematische Darstellung eines Querschnitts einer Antriebsvorrichtung für ein Hubtor mit einem einzelnen, sich nicht in gesamter Länge einer Hohlwelle erstreckenden Motor entlang der Schnittlinie A-A in Fig. 1A gemäß einer beispielhaften Ausführungsform.
- **Fig. 4**: Eine schematische Darstellung der Antriebsvorrichtung aus Fig. 1, zusätzlich mit einer Bremsvorrichtung gemäß einer beispielhaften Ausführungsform.
- **Fig. 5**: Eine schematische Darstellung eines Hubtores mit einer der in den Fig. 1 bis 3 dargestellten Antriebsvorrichtung gemäß einer beispielhaften Ausführungsform.
- **Fig. 6**: Ein Ablaufdiagramm eines Verfahrens zum Betreiben eines in Fig. 4 dargestellten Hubtores.

### DETAILLIERTE BESCHREIBUNG VON AUSFÜHRUNGSFORMEN

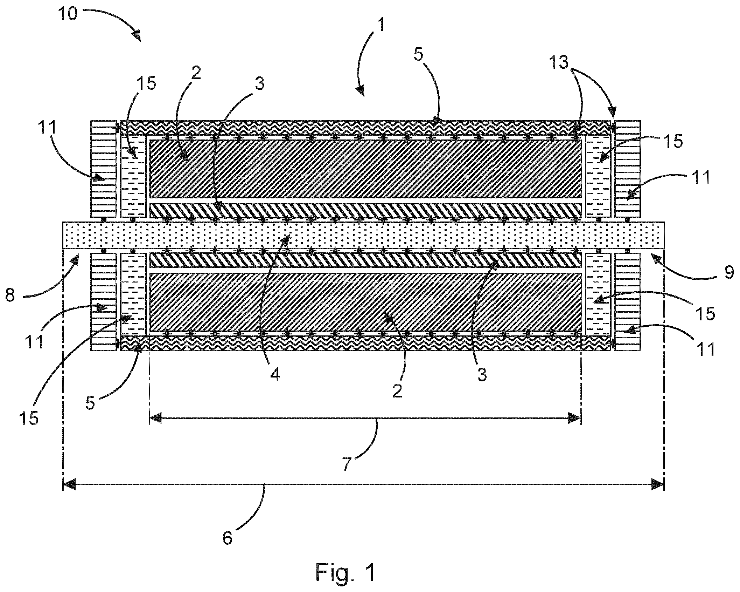

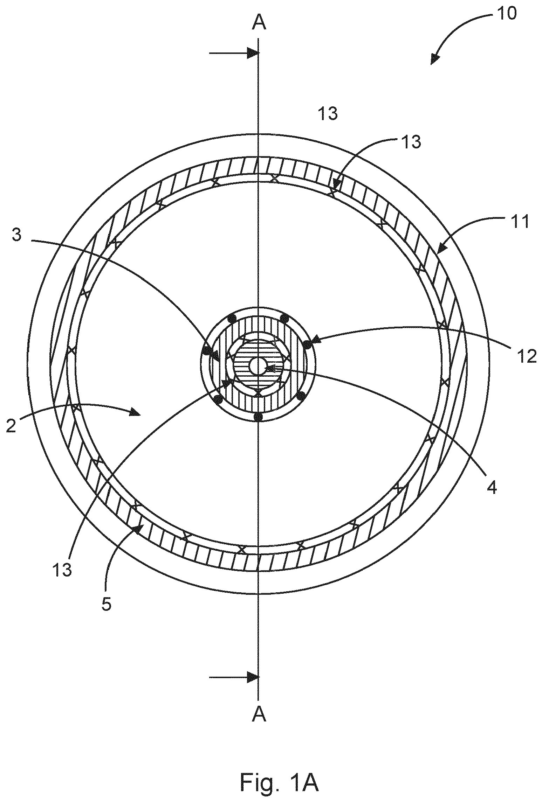

Unter Bezugnahme auf die Fig. 1 und 1A wird nun eine beispielhafte Ausführungsform einer Antriebsvorrichtung 10 gemäß der vorliegenden Offenbarung beschrieben. Die Fig. 1A zeigt die Antriebsvorrichtung in einer schematischen Seitenansicht. Dabei sind in der Draufsicht aus der dargestellten Perspektive nicht Sichtbare Elemente mit gestrichelten Außenkonturen dargestellt. Die Fig. 1 zeigt eine schematische Querschnittsdarstellung der Antriebsvorrichtung 10 aus der Fig. 1A entlang der Schnittlinie A-A. Im Allgemeinen sind in den Figuren feste, d.h. drehfeste Verbindungen 13 von zwei Komponenten schematisch durch Kreuze dargestellt. Drehbare Verbindungen 12 sind schematisch durch ausgefüllte Punkte dargestellt.

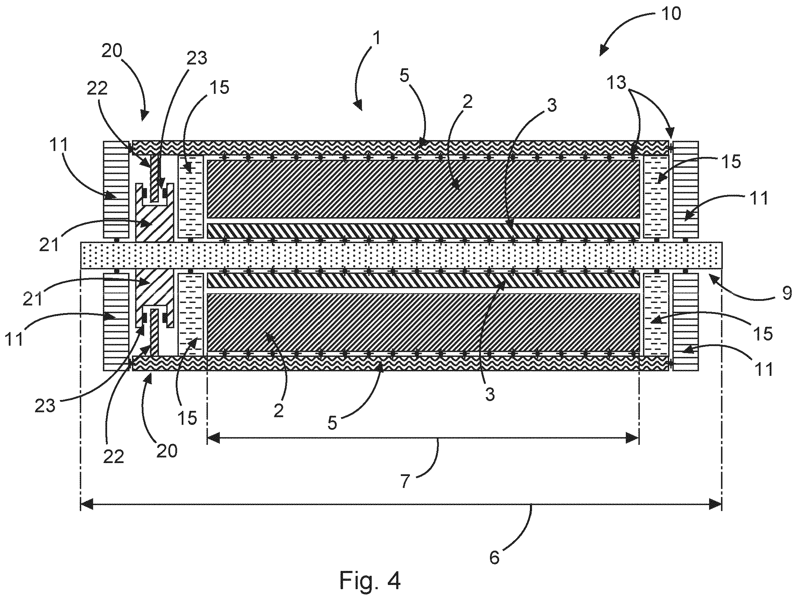

Die dargestellte Antriebsvorrichtung 10 weist eine Innenwelle 4 und einen äußere Hohlwelle 5 auf, welche die Innenwelle 4 umgibt und konzentrisch zu der Innenwelle 4 angeordnet ist. Bei der äußeren Hohlwelle 5 handelt es sich um einen Hohlzylinder bzw. um ein Rohr, wie am besten in Fig. 1A zu sehen ist. Bei der Innenwelle 4 handelt es sich um eine standardmäßige langgestreckte Welle. Die Innenwelle 4 ist zudem ausgelegt, an ihren seitlichen Enden in einem Torsturz 110 (s. Fig. 4) drehfest gelagert zu werden. Die Innenwelle 4 weist einen Innenwellenlänge 6 auf und die äußere Hohlwelle 5 weist eine innere Hohlwellenlänge 7 auf. Die Hohlwelle 5 ist an Ihren seitlichen Enden durch Hohlwellenlager 15 drehbar auf der Innenwelle 4 gelagert. Die Hohlwellenlänge 7 beschreibt die zur Unterbringung von einem oder mehreren Motoren 1 in der Hohlwelle 5 verfügbare Länge der Hohlwelle 5, d.h. die zwischen den Hohlwellenlagern 15 zur Verfügung stehende Länge. In der Fig. 1A sind die Hohlwellenlager 15 aus Übersichtlichkeitsgründen nicht dargestellt.

Ein inneres Motorelement 3 umgibt die Innenwelle 4 und ist, wie durch die dargestellten Kreuze angedeutet, drehfest mit dieser verbunden. Das innere Motorelement 3 ist von einem äußeren Motorelement 2 umgeben, welches ebenfalls konzentrisch zu der Innenwelle 4 und zu dem inneren Motorelement 3 ausgerichtet und angeordnet ist. Das äußere Motorelement 2 ist dabei relativ zu dem inneren Motorelement 3 drehbar.

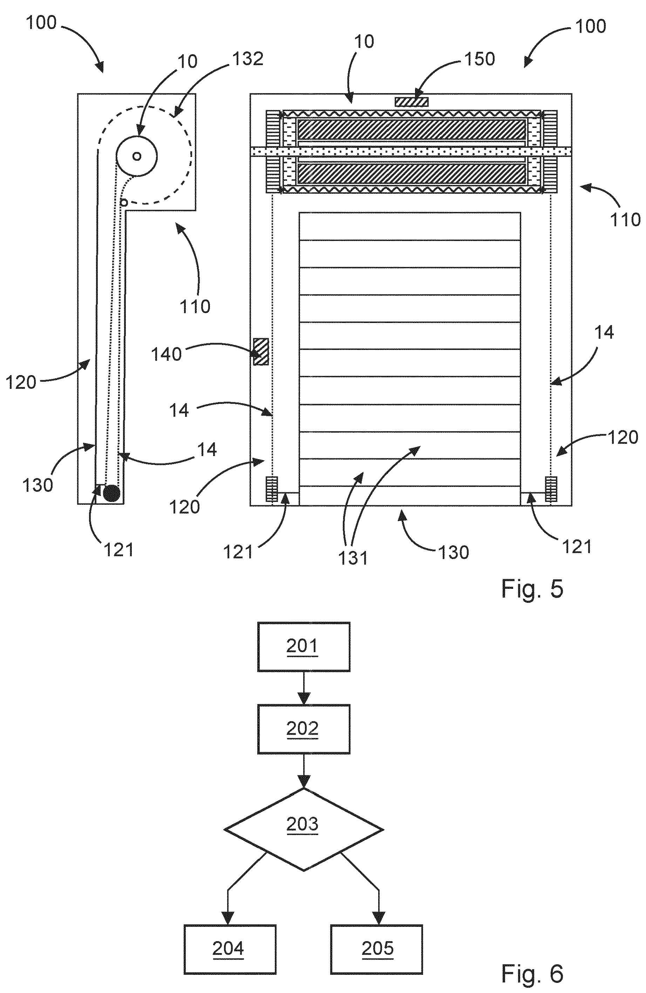

Da die Innenwelle 4 in einem eingebauten Zustand der Antriebsvorrichtung 10 (dargestellt in Fig. 5) drehfest in einem Torsturz 110 befestigt ist, das innere Motorelement 3 drehfest mit der Innenwelle 4 verbunden ist und das äußere Motorelement 2 drehbar auf dem inneren Motorelement 3 gelagert ist, bilden das innere Motorelement 3 und das äußere Motorelement 2 einen Außenläufermotor, welcher hierin als erster Motor 1 bezeichnet wird. Das innere Motorelement 4 fungiert dabei also als Stator des ersten Motors 1. Das äußere Motorelement 2 fungiert als Rotor des ersten Motors 1.

Obwohl in den Fig. 1 bis 5 nicht dargestellt, können sowohl das innere Motorelement 3 als auch das äußere Motorelement 2 entweder Magnetspulen oder Permanentmagneten enthalten. Es ist auch möglich, dass sowohl das innere Motorelement 3 als auch das äußere Motorelement 2 mit Magnetspulen ausgestattet sind. Allerdings weist zumindest eines des inneren Motorelements 3 und des äußeren Motorelements 2 Magnetspulen auf, so dass der erste Motor 1 einen Elektromotor darstellt. Wie der Fachmann ohne Weiteres erkennen wird, kann der erste Motor 1 dabei in jeder geeigneten Art und Weise ausgeführt sein, beispielsweise als Gleichstrommotor mit einem Kommutator oder als einphasiger oder mehrphasiger Wechselstrommotor wie beispielsweise als Drehstrom-Asynchronmotor oder als Synchronmotor. Insbesondere kann der erste Motor 1 in der dargestellten Ausführungsform eine Leistung von etwa 1 kW bis zu 3 kW und eine Kraft von etwa 1,2 kN oder mehr aufweisen. Insbesondere kann die Antriebsvorrichtung 10 eine Öffnungsgeschwindigkeit eines Hubtores 100 von bis zu 4 m/s zur Verfügung stellen.

Das äußere Motorelement 2 ist ferner fest mit der äußeren Hohlwelle 5 verbunden, wie ebenfalls durch Kreuze angedeutet ist. Dadurch versetzt eine Aktivierung des ersten Motors 1 die äußere Hohlwelle 5 in Drehung. Die äußere Hohlwelle 5 kann dann in eingebautem Zustand der Antriebsvorrichtung 10 beispielsweise zum Aufnehmen/Aufwickeln von folienartigen Torblättern 130 dienen.

Zudem ist in der dargestellten Antriebsvorrichtung 10 die Innenwellenlänge 6 größer als die Außenwellenlänge 7, wodurch die Innenwelle 4 einen ersten seitlichen Überstand 8 (gegenüber der Hohlwelle) und eine zweiten seitlichen Überstand 9 (gegenüber der Hohlwelle) aufweist. Auf dem ersten seitlichen Überstand 8 und dem zweiten seitlichen Überstand 9 ist jeweils eine Zahnscheibe 11 drehbar auf der Innenwelle 4 gelagert und fest mit der äußeren Hohlwelle 5 verbunden. Durch diese Anordnung werden die Zahnscheiben 11 bei Aktivierung des Motors ebenfalls in Drehung versetzt. Jede der Zahnscheiben 11 kann dabei die Motorkraft auf einen Zahnriemen übertragen, der beispielsweise bei Hubtoren 100 mit festen, segmentierten Torblättern 130 mit mindestens einem (beispielsweise dem untersten), oder allen Torblatt-Segmenten 131 verbunden sein kann, um so beim Aktivieren des ersten Motors 1 bzw. der Antriebsvorrichtung 10 das Torblatt 130 anzuheben oder abzusenken, d.h. das Hubtor 100 zu öffnen oder zu schließen.

Obwohl in den Fig. 1 bis 5 mit zwei Zahnscheiben 11 dargestellt, kann die Antriebsvorrichtung 10 auch lediglich eine Zahnscheibe 11 an einer Seite der Antriebsvorrichtung aufweisen. Zudem kann anstelle einer Zahnscheibe mit einem Zahnriemen beispielsweise auch eine Keilriemen-Scheibe mit einem Keilriemen oder eine Kettenscheibe mit einer Kette verwendet werden. Zudem ist zu beachten, dass die Antriebsvorrichtung 10, wenn diese für ein Hubtor 100 mit einem Folienbehang (wie beispielsweise einem PVC-Behang) als Torblatt 130 verwendet wird, keine Zahnscheiben 11 beinhaltet. In diesem Fall wird der Folienbehang direkt auf die äußere Hohlwelle aufgewickelt.

In der in Fig. 1 dargestellten Ausführungsform erstreckt sich der erste Motor 1 entlang der gesamten Hohlwellenlänge 7, wodurch ein hohes Drehmoment des ersten Motors 1 erreicht werden kann. Eine derartige Dimensionierung des ersten Motors 1 ist insbesondere durch die platzsparende Anordnung innerhalb der äußeren Hohlwelle 5 möglich.

Die Antriebsvorrichtung 10 kann ferner auch eine Kühlvorrichtung (nicht dargestellt) aufweisen. Dabei kann es sich beispielsweise um eine Luftkühlung oder um eine Flüssigkeitskühlung wie eine Wasserkühlung handeln. Bei einer Luftkühlung kann beispielsweise an einer Seite der Hohlwelle 5 ein Ventilator (nicht dargestellt) angebracht sein, der ausgelegt ist, Luft in die Hohlwelle 5 zu blasen. Ein solcher Ventilator kann beispielsweise außerhalb der Zahnscheibe 11, zwischen der Zahnscheibe 11 und dem Hohlwellenlager 15 oder innerhalb des Hohlwellenlagers 15 angeordnet sein. Um einen Luftstrom von außen durch den Ventilator in die Hohlwelle 5 zu ermöglichen, können das Hohlwellenlager 15 und die Zahnscheibe 11 entsprechende Lüftungsöffnungen beinhalten. Zudem kann auch der erste Motor 1 entsprechende Kühlkanäle (nicht dargestellt), die eine Luftstrom durch den ersten Motor 1 ermöglichen, beinhalten. Die Hohlwelle 5 kann ferner entsprechende Luftaustrittsöffnungen (nicht dargestellt) beinhalten, welche einen Austritt der erwärmten Luft aus der Hohlwelle 5 ermöglichen. Alternativ kann der erste Motor 1 auch wassergekühlt sein. Die Ausführungen bezüglich der Kühlkanäle in dem ersten Motor 1 gelten uneingeschränkt auch für eventuell vorhandene weitere Motoren 1, wie weiter unten beschrieben.

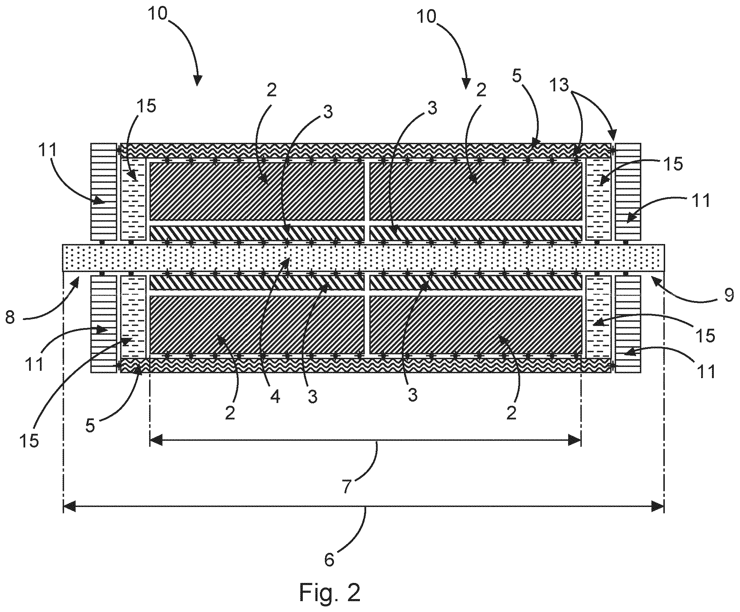

Die Fig. 2 zeigt eine weitere beispielhafte Ausführungsform der offenbarten Antriebsvorrichtung 10. Die in der Fig. 2 dargestellte Antriebsvorrichtung 10 unterscheidet sich von der in der Fig. 1 dargestellten Antriebsvorrichtung 10 insbesondere dadurch, dass der erste Motor 1 sich nicht entlang der gesamten Hohlwellenlänge 7 erstreckt, sondern lediglich einen Teil dieser Länge einnimmt. Zudem ist bei der in Fig. 2 dargestellten Antriebsvorrichtung ein zweiter Motor 1 vorhanden, der benachbart zu dem ersten Motor 1, d.h. auf der Innenwelle 4 neben dem ersten Motor 1, angeordnet ist. Die obige Diskussion bezüglich des ersten Motors 1 gilt dabei uneingeschränkt auch für den zweiten Motor 1.

Die Verwendung eines zweiten Motors 1 stellt eine zusätzliche Ausfallabsicherung zur Verfügung. Sollte einer der Motoren 1 ausfallen, so kann der verbleibende Motor 1 weiter betrieben werden und das Hubtor 100 betreiben oder halten. Zudem sind in dieser Ausgestaltung leistungsmäßig kleiner dimensionierte Motoren 1 ausreichend, da sich die Drehmomente der einzelnen Motoren 1 addieren und das nötige Gesamtdrehmoment auf mehreren Motoren 1 aufgeteilt werden kann.

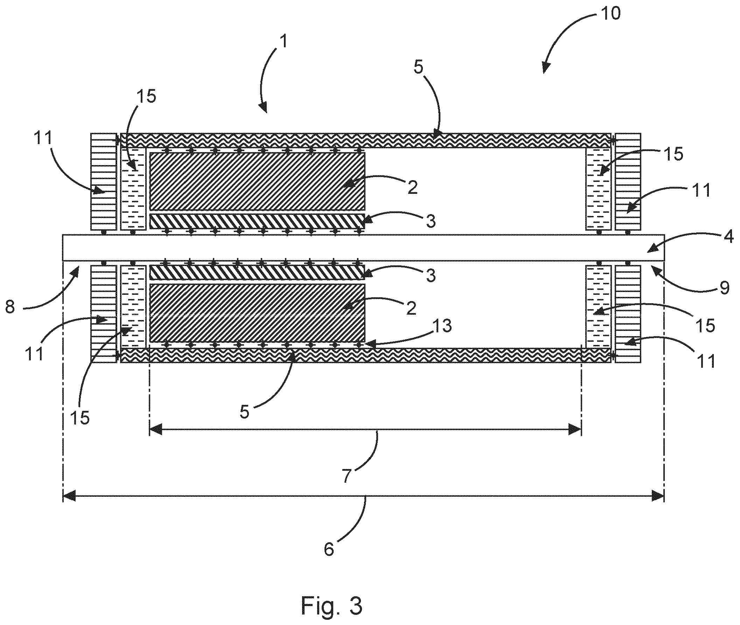

Die Fig. 3 stellt eine weitere beispielhafte Ausführungsform der offenbarten Antriebsvorrichtung 10 zur Verfügung. In dieser Ausführungsform ist, wie in Fig. 1, lediglich ein einzelner Motor 1 verbaut. Jedoch erstreckt sich dieser Motor 1 wie in Fig. 2 nicht entlang der gesamten Hohlwellenlänge 7. Eine solche Ausführungsform ist insbesondere bei kleineren Hubtoren 100 oder bei Hubtoren 100 mit leichten Torblättern 130 (beispielsweise bei folienartigen Torblättern 130) denkbar. Der Fachmann wird die passende leistungsmäßige Dimensionierung des Motors 1 ohne Weiteres erkennen und vornehmen.

Die Fig. 4 zeigt eine weitere beispielhafte Ausführungsform der offenbarten Antriebsvorrichtung 10. Die in der Fig. 4 dargestellte Antriebsvorrichtung 10 unterscheidet sich von der in der Fig. 1 dargestellten Antriebsvorrichtung 10 lediglich darin, dass diese zusätzlich eine Bremsvorrichtung 20 beinhaltet. Die dargestellte Bremsvorrichtung 20 weist zwei Bremssättel 21 auf, die fest mit der Innenwelle 4 verbunden und auf voneinander gegenüberliegenden Seiten der Innenwelle 4 angeordnet sind. Jeder der Bremssättel 21 weist zwei Bremsbeläge 23 auf, die durch Bremszylinder (nicht dargestellt) in dem entsprechenden Bremssattel 21 nach ausgefahren werden können. Eine Bremsscheibe 22, welche als Hohlscheibe ausgestaltet ist, erstreckt sich von der inneren Oberfläche der äußeren Hohlwelle 5 nach innen und verläuft durch eine Ausnehmung in den Bremssätteln 21. Im gelösten Zustand der Bremsvorrichtung 20 kann wird die Bremsscheibe 22 nicht oder nur geringfügig an ihrer Bewegung gehindert. Dadurch kann die äußere Hohlwelle ungehindert durch den Motor 1 angetrieben werden. Im betätigten Zustand der Bremsvorrichtung 20 werden die Bremsbeläge 23 gegen die Bremsscheibe 22 gedrückt und bremsen so die Rotationsbewegung der Bremsscheibe 22 und damit der Hohlwelle 5. Die Bremsvorrichtung 20 kann als Verzögerungsbremse oder als Feststellbremse verwendet werden. Die Bremsvorrichtung 20 kann auf jede geeignete Weise betrieben werden. Beispielsweise kann die Bremsvorrichtung 20 elektrisch oder hydraulisch betätigt werden. Zudem kann anstelle der dargestellten Scheibenbremse auch beispielsweise eine Trommelbremse oder eine andere geeignete Bremstechnologie verwendet werden.

Fig. 5 stellt ein Hubtor 100 gemäß einer beispielhaften Ausführungsform der vorliegenden Offenbarung dar. Die linke Seite der Fig. 5 zeigt das Hubtor 100 in einer schematischen Seitenansicht. Die rechte Seite der Fig. 5 zeigt das Hubtor 100 in einer Frontalansicht. Das dargestellte Hubtor 100 ist als Hubtor 100 mit einem festen segmentierten Torblatt 130 mit mehreren zusammenhängenden und zueinander schwenkbaren Torblatt-Segmenten 131 dargestellt. Das Torblatt 130 bzw. die Torblatt-Segmente 131 sind in zwei seitlichen Torzargen 120 beweglich so gelagert, dass das Torblatt 130 bezüglich der Torzargen 120 nach oben und nach unten gleiten kann. Dazu sind entsprechende Führungsrollen (nicht dargestellt) gleitend in entsprechende Schienen (nicht dargestellt) in den Torzargen eingebracht.

Eine zuvor mit Bezug zu den Figuren 1 bis 4 beschriebene Antriebsvorrichtung 10 ist in einen Torsturz 110 an der Oberseite des Hubtores 100 integriert. Die Innenwelle 4 der Antriebsvorrichtung 10 ist an den Seiten des Torsturzes drehfest gelagert. Je ein Zahnriemen 14 läuft über die Zahnscheiben 11 auf der rechten und der linken Seite der Antriebsvorrichtung. Die Zahnriemen 11 sind in der dargestellten Ausführung mit dem untersten Torblatt-Segment 131 über entsprechende linke und rechte Zahnriemenanbindungen 121 verbunden. Zudem ist in bestimmten Ausführungen auch vorgesehen, dass die Antriebsvorrichtung 10 lediglich eine Zahnscheibe 11 mit einem Zahnriemen 14 aufweist. Auch kann anstelle der Zahnscheibe 11 eine Keilriemen-Scheibe oder eine Kettenscheibe bzw. ein Kettenrad verwendet werden, welche mit einem Keilriemen bzw. einer Kette in Wirkverbindung stehen.

In der Seitenansicht des Hubtores ist eine Spiralaufnahme 132 für das Torblatt 130 in dem Torsturz 110 durch eine gestrichelte Linie angedeutet. Obwohl nur eine Windung der Spirale angedeutet ist, kann die Spirale mehrere Windungen aufweisen, insbesondere so viele Windungen, dass das ganze Torblatt 130 bei einer vollständigen Öffnung des Hubtores 100 aufgenommen werden kann.

Obwohl das Hubtor 100 als Tor mit einer Spiralaufnahme für das Torblatt dargestellt ist, kann es auch so ausgestaltet sein, dass das Torblatt 130 beim Öffnen senkrecht nach oben aus dem Torsturz 110 geschoben wird und parallel zur Wand, in der das Hubtor 100 verbaut ist, verläuft. Zudem sind auch Ausführungen des Hubtores 100 denkbar, in denen das Torblatt 130 zunächst nach oben geschoben wird und seine Bewegungsrichtung dann so wechselt, dass das Torblatt 130 im geöffneten Zustand parallel zu einer Decke über dem Hubtor 100 verläuft.

Zudem ist das dargestellte Hubtor 100 mit einem Bedienfeld 140 und mit Sensoren 150 ausgestattet. Das Hubtor 100 kann jedoch ebenso lediglich ein Bedienfeld 140 ohne Sensoren 150 oder lediglich Sensoren 150 ohne ein Bedienfeld 140 aufweisen. Über das Bedienfeld können Steueranweisungen an das Tor durch einen Benutzer zum Öffnen oder Schließen des Hubtores 100 eingegeben werden. Bei einer Anforderung zum Öffnen des Tores wird die Antriebseinheit 10 (wie zuvor mit Bezug auf die Fig. 1 bis 3 beschrieben) derart in Drehung versetzt, dass das Torblatt über die Zahnriemen 14 nach oben gezogen und in der Spiralaufnahme 132 verstaut wird. Bei einer Anforderung zum Schließen des Hubtores 100 wird die Antriebseinheit 10 in der entgegengesetzten Richtung in Drehung versetzt, um so das Torblatt 130 wieder abzulassen. Ein Schließen des Hubtores 100 kann zudem auch nach einer vorbestimmten geöffneten Zeit automatisch, ohne Anforderung eines Benutzers, erfolgen. Das Hubtor 100 kann auch automatisch geöffnet werden, wenn die Sensoren ein sich näherndes Objekt oder eine sich nähernde Person erkennen. Nach der Durchfahrt oder dem Durchgang des Objekts oder der Person kann das Hubtor 100 wieder automatisch geschlossen werden, indem die Antriebsvorrichtung in der entgegengesetzten Richtung betrieben wird und so das Torblatt 130 wieder herablässt.

Es ist zu beachten, dass das Bedienfeld 140 und die Sensoren 150 ebenso an anderen Stellen angebracht sein können und nicht auf die dargestellten Positionen beschränkt sind. Die Sensoren 150 können zudem Sensoren 150 zum Erkennen entsprechender Transponder beinhalten, um so eine Zugangskontrolle zu ermöglichen.

Fig. 6 stellt ein Ablaufdiagramm eines Verfahrens zum Betreiben des in Fig. 5 dargestellten Hubtores 100 dar.

Bei Schritt 201 wird eine Nutzereingabe 203 zum Öffnen oder Schließen des Hubtores 100 erfasst. Bei der Benutzereingabe kann es sich um eine Eingabe eines Benutzers über das Bedienfeld 140 oder um eine automatische Eingabe der Sensoren 150, beispielsweise wenn sich eine Person dem Hubtor 100 nähert, handeln.

Bei Schritt 202 wird die Antriebsvorrichtung 10 bzw. der/die Motor/en 1 der Antriebsvorrichtung mit Energie versorgt.

Abschließend wird, abhängig von der Art der Nutzereingabe 203, das Tor entweder in Schritt 204 durch Betreiben der Antriebsvorrichtung 10 in der entsprechenden Richtung geöffnet, oder in Schritt 205 durch Betreiben der Antriebsvorrichtung 10 in der entgegengesetzten Richtung gemäß der zuvor beschriebenen Funktionsprinzipien geschlossen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 1: Motor
- 2: äußeres Motorelement
- 3: inneres Motorelement
- 4: Innenwelle
- 5: Hohlwelle
- 6: Innenwellenlänge
- 7: Hohlwellenlänge
- 8: erster seitlicher Überstand
- 9: zweiter seitlicher Überstand
- 10: Antriebsvorrichtung
- 11: Zahnscheibe
- 12: drehbare Verbindung
- 13: drehfeste Verbindung
- 14: Zahnriemen
- 15: Hohlwellenlager
- 20: Bremsvorrichtung
- 21: Bremssattel
- 22: Bremsscheibe
- 23: Bremsbeläge
- 100: Hubtor
- 110: Torsturz
- 120: Torzargen
- 121: Zahnriemenanbindung
- 130: Torblatt
- 131: Torblatt-Segmente
- 132: Spiralaufnahme
- 140: Bedienfeld
- 150: Sensoren
- 200: Verfahren
- 201: Erfassen einer Nutzereingabe
- 202: Aktivieren der Antriebsvorrichtung
- 203: Nutzereingabe
- 204: Anheben des Torblattes
- 205: Absenken des Torblattes

## Patentansprüche

1. Antriebsvorrichtung (10) für ein Hubtor (100), aufweisend:
eine Innenwelle (4) mit einer Innenwellenlänge (6); und
eine äußere Hohlwelle (5) mit einer Hohlwellenlänge (7);
wobei die äußere Hohlwelle (5) konzentrisch mit der Innenwelle (4) ausgerichtet ist; wobei die Innenwelle (4) ausgestaltet ist, in einem eingebauten Zustand drehfest an dem Hubtor (100) gelagert zu sein;
wobei die äußere Hohlwelle (5) sich um die Innenwelle (4) dreht, wenn die Antriebsvorrichtung (10) in dem eingebauten Zustand in Betrieb genommen wird; und wobei die äußere Hohlwelle (5) konfiguriert ist, ein Torblatt (130) des Hubtores (100) aufzuwickeln oder abzuwickeln, wenn die Antriebsvorrichtung (10) in Betrieb genommen wird.

2. Antriebsvorrichtung (10) nach Anspruch 1, ferner aufweisend einen ersten Motor (1) mit einem ersten äußeren Motorelement (2) und einem ersten inneren Motorelement (3), wobei das erste innere Motorelement (3) drehfest auf der Innenwelle (4) gelagert ist;
wobei das erste äußere Motorelement (2) das erste innere Motorelement (3) umgibt und über eine drehbare Verbindung (12) mit dem ersten inneren Motorelement (3) verbunden ist;
wobei die äußere Hohlwelle (5) das erste äußere Motorelement (2) umgibt; und wobei die äußere Hohlwelle (5) über eine drehfeste Verbindung (13) mit dem ersten äußeren Motorelement (2) verbunden ist;

3. Antriebsvorrichtung (10) nach Anspruch 2, wobei die äußere Hohlwelle (5) integral mit dem ersten äußeren Motorelement (2) ausgebildet ist.

4. Antriebsvorrichtung nach Anspruch 2, wobei die drehfeste Verbindung (13) der äußeren Hohlwelle (5) mit dem ersten äußeren Motorelement (2) über eine reibschlüssige Verbindung zur Verfügung gestellt wird.

5. Antriebsvorrichtung nach Anspruch 2, wobei die drehfeste Verbindung (13) der äußeren Hohlwelle (5) mit dem ersten äußeren Motorelement (2) durch eine Schraubverbindung, durch eine Schweißverbindung, durch eine Nietverbindung oder durch eine Klebeverbindung zur Verfügung gestellt wird.

6. Antriebsvorrichtung (10) nach einem der Ansprüche 2 bis 5, wobei das erste äußere Motorelement (2) und das erste innere Motorelement (3) sich entlang der gesamten Hohlwellenlänge (7) erstrecken.

7. Antriebsvorrichtung (10) nach einem der Ansprüche 2 bis 5, ferner aufweisend mindestens einen zweiten Motor (1) mit einem zweiten äußeren Motorelement (2) und einem zweiten inneren Motorelement (3), wobei der zweite Motor (1) benachbart zu dem ersten Motor (1) angeordnet ist;
wobei das zweite innere Motorelement (3) drehfest auf der Innenwelle (4) gelagert ist; wobei das zweite äußere Motorelement (2) das zweite innere Motorelement (3) umgibt und über eine drehbare Verbindung (12) mit dem zweiten inneren Motorelement (3) verbunden ist; und
wobei die äußere Hohlwelle (5) das zweite äußere Motorelement (2) umgibt und über eine drehfeste Verbindung (13) mit dem zweiten äußeren Motorelement (2) in gleicher Weise wie mit dem ersten äußeren Motorelement (2) verbunden ist;

8. Antriebsvorrichtung (10) nach einem der vorstehenden Ansprüche, wobei die Innenwellenlänge (6) größer ist als die Hohlwellenlänge (7), so dass die Innenwelle (4) seitlich über die Hohlwelle (5) so hervorsteht, dass ein erster seitlicher Überstand (8) und ein zweiter seitlicher Überstand (9) gebildet wird;
wobei an mindestens einem des ersten seitlichen Überstands (8) und des zweiten seitlichen Überstands (9) eine Zahnscheibe (11) auf der Innenwelle (4) und drehbar zu der Innenwelle (4) gelagert ist; und
wobei die äußere Hohlwelle (5) fest mit der Zahnscheibe (11) verbunden ist.

9. Antriebsvorrichtung (10) nach einem der vorstehenden Ansprüche, wobei der erste Motor (1) ein Drehstrom-Asynchronmotor ist.

10. Antriebsvorrichtung (10) nach einem der vorstehenden Ansprüche, wobei der erste Motor (1) ein Synchronmotor ist.

11. Antriebsvorrichtung (10) nach einem der vorstehenden Ansprüche, ferner aufweisend eine Bremsvorrichtung (20), wobei die Bremsvorrichtung (20) ausgestaltet ist, die äußere Hohlwelle (5) mit der Innenwelle (4) selektiv drehfest zu verbinden, um eine Bewegung der Antriebsvorrichtung zu bremsen.

12. Hubtor (100), aufweisend:
eine Antriebsvorrichtung (10) nach einem der Ansprüche 1 bis 10;
eine erste Torzarge (120) und eine zweite Torzarge (120);
einen Torsturz (110);
ein Torblatt (130); und
eine Eingabevorrichtung (140, 150)
wobei die Antriebsvorrichtung (10) in dem Torsturz (110) angeordnet ist;
wobei die Innenwelle (4) der Antriebsvorrichtung (10) drehfest an einer ersten Seite und an einer zweiten Seite des Torsturz (110) gelagert ist;
wobei das Torblatt (130) in der ersten Torzarge (120) und in der zweiten Torzarge (120) geführt wird; und
wobei die äußere Hohlwelle (5) das Torblatt (130) aufwickelt oder abwickelt, wenn die Antriebsvorrichtung (10) über die Eingabevorrichtung (140, 150) in Betrieb genommen wird.

13. Verfahren (200) zum Betreiben eines Hubtores (100) nach Anspruch 12, wobei das Verfahren (200) die Schritte umfasst:
Erfassen (201) einer Nutzereingabe (203) zum Öffnen oder Schließen des Hubtores (100);
Aktivieren (202) der Antriebsvorrichtung (10) durch Versorgen der Antriebsvorrichtung (10) mit elektrischer Energie als Reaktion auf das Erfassen der Nutzereingabe (203); abhängig von der Art der Nutzereingabe (203), Anheben (204) oder Absenken (205) des Torblattes (130) durch die aktivierte Antriebsvorrichtung (10) über die äußere Hohlwelle (5), durch Betreiben der Antriebsvorrichtung (10) in der entsprechenden Richtung;

14. Verfahren (200) nach Anspruch 13, wobei die Nutzereingabe (203) eine Eingabe über ein Bedienfeld (140) des Hubtores (100) ist.

15. Verfahren (200) nach Anspruch 13, wobei die Nutzereingabe (203) ein Erfassen eines sich auf das Hubtor (100) zubewegenden Gegenstandes durch Sensoren (150) ist.

## Claims

1. A drive device (10) for a lifting door (100), comprising:
an inner shaft (4) having an inner shaft length (6); and
an outer hollow shaft (5) having a hollow shaft length (7);
wherein the outer hollow shaft (5) is aligned concentrically with the inner shaft (4); wherein the inner shaft (4) is designed to be mounted in a rotationally fixed manner on the lifting door (100) in an installed state;
wherein the outer hollow shaft (5) rotates about the inner shaft (4) when the drive device (10) is activated in the installed state; and
wherein the outer hollow shaft (5) is configured to wind up or unwind a door leaf (130) of the lifting door (100) when the drive device (10) is activated.

2. The drive device (10) according to claim 1, further comprising a first motor (1) with a first outer motor element (2) and a first inner motor element (3), wherein the first inner motor element (3) is mounted in a rotationally fixed manner on the inner shaft (4);
wherein the first outer motor element (2) surrounds the first inner motor element (3) and is connected to the first inner motor element (3) via a rotatable connection (12); wherein the outer hollow shaft (5) surrounds the first outer motor element (2); and wherein the outer hollow shaft (5) is connected to the first outer motor element (2) via a rotationally fixed connection (13).

3. The drive device (10) according to claim 2, wherein the outer hollow shaft (5) is formed integrally with the first outer motor element (2).

4. The drive device according to claim 2, wherein the rotationally fixed connection (13) of the outer hollow shaft (5) to the first outer motor element (2) is provided via a frictional connection.

5. The drive device according to claim 2, wherein the rotationally fixed connection (13) of the outer hollow shaft (5) to the first outer motor element (2) is provided by a screw connection, by a welded connection, by a riveted connection or by an adhesive connection.

6. The drive device (10) according to any one of claims 2 to 5, wherein the first outer motor element (2) and the first inner motor element (3) extend along the entire hollow shaft length (7).

7. The drive device (10) according to any one of claims 2 to 5, further comprising at least one second motor (1) with a second outer motor element (2) and a second inner motor element (3), wherein the second motor (1) is arranged adjacent to the first motor (1);
wherein the second inner motor element (3) is mounted in a rotationally fixed manner on the inner shaft (4);
wherein the second outer motor element (2) surrounds the second inner motor element (3) and is connected to the second inner motor element (3) via a rotatable connection (12); and
wherein the outer hollow shaft (5) surrounds the second outer motor element (2) and is connected to the second outer motor element (2) in the same way as to the first outer motor element (2) via a rotationally fixed connection (13).

8. The drive device (10) according to any one of the preceding claims, wherein the inner shaft length (6) is greater than the hollow shaft length (7), so that the inner shaft (4) protrudes laterally beyond the hollow shaft (5) such that a first lateral protrusion (8) and a second lateral protrusion (9) are formed;
wherein a toothed disc (11) is mounted on the inner shaft (4) and rotatably with respect to the inner shaft (4) on at least one of the first lateral protrusion (8) and the second lateral protrusion (9); and
wherein the outer hollow shaft (5) is fixedly connected to the toothed disc (11).

9. The drive device (10) according to any one of the preceding claims, wherein the first motor (1) is a polyphase current asynchronous motor.

10. The drive device (10) according to any one of the preceding claims, wherein the first motor (1) is a synchronous motor.

11. The drive device (10) according to any one of the preceding claims, further comprising a braking device (20), wherein the braking device (20) is designed to selectively connect the outer hollow shaft (5) to the inner shaft (4) in a rotationally fixed manner in order to brake a movement of the drive device.

12. A lifting door (100), comprising:
a drive device (10) according to any one of claims 1 to 10;
a first door frame (120) and a second door frame (120);
a door lintel (110);
a door leaf (130); and
an input device (140, 150),
wherein the drive device (10) is arranged in the door lintel (110);
wherein the inner shaft (4) of the drive device (10) is mounted in a rotationally fixed manner on a first side and on a second side of the door lintel (110);
wherein the door leaf (130) is guided in the first door frame (120) and in the second door frame (120); and
wherein the outer hollow shaft (5) winds up or unwinds the door leaf (130) when the drive device (10) is activated via the input device (140, 150).

13. A method (200) for operating a lifting door (100) according to claim 12, wherein the method (200) comprises the steps of:
detecting (201) a user input (203) for opening or closing the lifting door (100); activating (202) the drive device (10) by supplying the drive device (10) with electrical energy in response to the detection of the user input (203);
depending on the type of the user input (203), lifting (204) or lowering (205) the door leaf (130) by the activated drive device (10) via the outer hollow shaft (5), by operating the drive device (10) in the corresponding direction.

14. The method (200) according to claim 13, wherein the user input (203) is an input via a control panel (140) of the lifting door (100).

15. The method (200) according to claim 13, wherein the user input (203) is a detection of an object moving onto the lifting door (100) by sensors (150).

## Revendications

1. Dispositif d'entraînement (10) pour une porte relevable (100), comprenant :
un arbre intérieur (4) avec une longueur d'onde intérieure (6) ; et
un arbre creux extérieur (5) avec une longueur d'onde creuse (7) ;
dans lequel l'arbre creux extérieur (5) est aligné de manière concentrique avec l'arbre intérieur (4) ;
dans lequel l'arbre intérieur (4) est configuré pour être supporté de manière solidaire en rotation sur la porte relevable (100) dans un état monté ;
dans lequel l'arbre creux extérieur (5) tourne autour de l'arbre intérieur (4) lorsque le dispositif d'entraînement (10) est mis en service dans l'état monté ; et
dans lequel l'arbre creux extérieur (5) est configuré pour enrouler ou dérouler un panneau de porte (130) de la porte relevable (100) lorsque le dispositif d'entraînement (10) est mis en service.

2. Dispositif d'entraînement (10) selon la revendication 1, comprenant en outre un premier moteur (1) avec un premier élément de moteur extérieur (2) et un premier élément de moteur intérieur (3), dans lequel le premier élément de moteur intérieur (3) est supporté de manière solidaire en rotation sur l'arbre intérieur (4) ;
dans lequel le premier élément de moteur extérieur (2) entoure le premier élément de moteur intérieur (3) et est relié au premier élément de moteur intérieur (3) par le biais d'une liaison rotative (12) ;
dans lequel l'arbre creux extérieur (5) entoure le premier élément de moteur extérieur (2) ; et
dans lequel l'arbre creux extérieur (5) est relié au premier élément de moteur extérieur (2) par le biais d'une liaison solidaire en rotation (13).

3. Dispositif d'entraînement (10) selon la revendication 2, dans lequel l'arbre creux extérieur (5) est formé d'un seul tenant avec le premier élément de moteur extérieur (2).

4. Dispositif d'entraînement selon la revendication 2, dans lequel la liaison solidaire en rotation (13) de l'arbre creux extérieur (5) avec le premier élément de moteur extérieur (2) est fournie par le biais d'une liaison par friction.

5. Dispositif d'entraînement selon la revendication 2, dans lequel la liaison solidaire en rotation (13) de l'arbre creux extérieur (5) avec le premier élément de moteur extérieur (2) est fournie par le biais d'une liaison vissée, par le biais d'une liaison soudée, par le biais d'une liaison rivetée ou par le biais d'une liaison collée.

6. Dispositif d'entraînement (10) selon l'une quelconque des revendications 2 à 5, dans lequel le premier élément de moteur extérieur (2) et le premier élément de moteur intérieur (3) s'étendent le long de toute la longueur d'onde creuse (7).

7. Dispositif d'entraînement (10) selon l'une quelconque des revendications 2 à 5, comprenant en outre au moins un deuxième moteur (1) avec un deuxième élément de moteur extérieur (2) et un deuxième élément de moteur intérieur (3), dans lequel le deuxième moteur (1) est disposé de manière adjacente au premier moteur (1) ; dans lequel le deuxième élément de moteur intérieur (3) est supporté de manière solidaire en rotation sur l'arbre intérieur (4) ;
dans lequel le deuxième élément de moteur extérieur (2) entoure le deuxième élément de moteur intérieur (3) et est relié au deuxième élément de moteur intérieur (3) par le biais d'une liaison rotative (12) ; et
dans lequel l'arbre creux extérieur (5) entoure le deuxième élément de moteur extérieur (2) et
est relié au deuxième élément de moteur extérieur (2) de la même manière qu'au premier élément de moteur extérieur (2) par le biais d'une liaison solidaire en rotation (13).

8. Dispositif d'entraînement (10) selon l'une quelconque des revendications précédentes, dans lequel la longueur d'onde intérieure (6) est supérieure à la longueur d'onde creuse (7) de sorte que l'arbre intérieur (4) fait saillie latéralement au-delà de l'arbre creux (5) de sorte qu'une première saillie latérale (8) et une deuxième saillie latérale (9) sont formées ;
dans lequel un disque denté (11) est supporté sur l'arbre intérieur (4) et de manière rotative par rapport à l'arbre intérieur (4) au niveau d'au moins l'une de la première saillie latérale (8) et de la deuxième saillie latérale (9) ; et
dans lequel l'arbre creux extérieur (5) est relié de manière fixe au disque denté (11).

9. Dispositif d'entraînement (10) selon l'une quelconque des revendications précédentes, dans lequel le premier moteur (1) est un moteur asynchrone polyphasé.

10. Dispositif d'entraînement (10) selon l'une quelconque des revendications précédentes, dans lequel le premier moteur (1) est un moteur synchrone.

11. Dispositif d'entraînement (10) selon l'une quelconque des revendications précédentes, comprenant en outre un dispositif de freinage (20), dans lequel le dispositif de freinage (20) est configuré pour relier de manière solidaire en rotation de manière sélective l'arbre creux extérieur (5) à l'arbre intérieur (4) afin de freiner un mouvement du dispositif d'entraînement.

12. Porte relevable (100), comprenant :
un dispositif d'entraînement (10) selon l'une quelconque des revendications 1 à 10 ;
un premier châssis de porte (120) et un second châssis de porte (120) ;
un linteau de porte (110) ;
un panneau de porte (130) ; et
un dispositif d'entrée (140, 150)
dans lequel le dispositif d'entraînement (10) est disposé dans le linteau de porte (110)
dans lequel l'arbre intérieur (4) du dispositif d'entraînement (10) est supporté de manière solidaire en rotation sur un premier côté et sur un second côté du linteau de porte (110) ;
dans lequel le panneau de porte (130) est guidé dans le premier châssis de porte (120) et dans le second châssis de porte (120) ; et
dans lequel l'arbre creux extérieur (5) enroule ou déroule le panneau de porte (130) lorsque le dispositif d'entraînement (10) est mis en service par le biais du dispositif d'entrée (140, 150).

13. Procédé (200) pour faire fonctionner une porte relevable (100) selon la revendication 12, le procédé (200) comprenant les étapes consistant à :
détecter (201) une entrée d'utilisateur (203) pour ouvrir ou fermer la porte relevable (100) ;
activer (202) le dispositif d'entraînement (10) en alimentant le dispositif d'entraînement (10) en énergie électrique en réponse à la détection de l'entrée d'utilisateur (203) ;
en fonction du type de l'entrée d'utilisateur (203), lever (204) ou abaisser (205) le panneau de porte (130) par le dispositif d'entraînement (10) activé par le biais de l'arbre creux extérieur (5), en faisant fonctionner le dispositif d'entraînement (10) dans la direction correspondante.

14. Procédé (200) selon la revendication 13, dans lequel l'entrée d'utilisateur (203) est une entrée par le biais d'un panneau de commande (140) de la porte relevable (100).

15. Procédé (200) selon la revendication 13, dans lequel l'entrée d'utilisateur (203) est une détection d'un objet se déplaçant sur la porte relevable (100) par des capteurs (150).
